# EUROPEAN PATENT SPECIFICATION

(11) **EP 0 718 644 B1**
(45) Date of publication and mention of the grant of the patent: **21.03.2001**
(21) Application number: 95120145.8
(22) Date of filing: 20.12.1995
(51) Int. Cl.: G02B 5/20, G02F 1/1335, G03F 1/10, G03C 7/12

(54) **Production process of color filter**
Herstellungsverfahren für Farbfilter
Procédé de production d'un filtre coloré

(30) Priority: 21.12.1994 JP 31831594; 13.12.1995 JP 32449695
(43) Date of publication of application: 26.06.1996
(73) Proprietor: CANON KABUSHIKI KAISHA, Tokyo (JP)
(72) Inventor: Shiba, Shoji, Ohta-ku, Tokyo (JP); Sato, Hiroshi, Ohta-ku, Tokyo (JP); Shirota, Katsuhiro, Ohta-ku, Tokyo (JP); Yokoi, Hideto, Ohta-ku, Tokyo (JP); Miyazaki, Takeshi, Ohta-ku, Tokyo (JP); Kashiwazaki, Akio, Ohta-ku, Tokyo (JP)
(74) Representative: Weser, Wolfgang

(56) References cited:
- EP-A- 0 552 035
- EP-A- 0 665 449
- PATENT ABSTRACTS OF JAPAN vol. 017, no. 703 (P-1666), 22 December 1993 & JP 05 241011 A (TORAY IND INC), 21 September 1993,
- PATENT ABSTRACTS OF JAPAN vol. 016, no. 382 (P-1403), 14 August 1992 & JP 04 123007 A (TORAY IND INC), 23 April 1992,
- PATENT ABSTRACTS OF JAPAN vol. 8, no. 183 (P-296), 23 August 1994 & JP 59 075205 A (SUWA SEIKOSHA KK), 27 April 1984,

## Description

### BACKGROUND OF THE INVENTION

### Field of the Invention

The present invention relates to a production process of a color filter suitable for use in color liquid crystal display devices used in color televisions, personal computers, etc., and particularly to a production process of a color filter for liquid crystal display device making good use of an ink-jet recording technique.

### Related Background Art

With the advancement of personal computers, particularly, portable personal computers in recent years, the demand for liquid crystal display devices, particularly, color liquid crystal display devices tends to increase. It is however necessary to reduce the cost of the color liquid crystal display devices for further spreading them. There is an increasing demand for reduction in the cost of color filters particularly given much weight from the viewpoint of the cost.

Various methods have heretofore been attempted for meeting the above demand while satisfying properties required of the color filters. However, no method satisfying all the required properties is yet established under the circumstances. The individual methods will hereinafter be described.

The first method oftenest used is a dyeing process. In the dyeing process, a water-soluble polymeric material, which is a material to be dyed, is first applied to a glass base, and the coating film thus formed is patterned in the desired form by a photolithographic process. Thereafter, the base on which the coating film has been patterned is immersed in a dye bath to obtain a colored pattern. This process is repeatedly performed three times to produce a color filter composed of colored patterns of red (R), green (G) and blue (B).

As another illustration of this dyeing process, Japanese Patent Application Laid-Open No. 5-288913 describes a production process of a color filter composed of three colored patterns of R, G and B, wherein a photosensitive layer is provided on a base to expose on the desired pattern, unexposed portions of the photosensitive layer are dyed, and this process is repeatedly performed three times.

Japanese Patent Application Laid-Open Nos. 5-188215 and 5-273410 (EP 0,552,035 A1) each describe a production process of a color filter composed of three color patterns of R, G and B, wherein a polysilane layer is used as a layer on which a color filter is to be formed, and patterning exposure is repeatedly performed three times to this layer.

The second method is a pigment dispersing process which has been replacing the dyeing process in recent years. In this process, a layer of a photosensitive resin in which a pigment has been dispersed is first formed on a base and then subjected to patterning, thereby obtaining a pattern of a single color. This process is repeatedly performed three times, thereby producing a color filter composed of colored patterns of R, G and B.

As the third method, there is an electrodepostion process. In this process, a transparent electrode is first patterned on a base. The base is then immersed in an electrodeposition coating fluid containing a pigment, resin, electrolytic solution and the like to electrically deposit the first color. This process is repeatedly performed three times, thereby forming a color filter layer composed of colored patterns of R, G and B. Finally, this color filter layer is calcined to produce a color filter.

The fourth method is a process in which pigments are separately dispersed in a thermosetting resin, the resultant thermosetting resin dispersions of R, G and B colors are separately applied to a base by repeating printing three times, and the resin portions thus applied are then thermoset to form a colored layer.

It is general to form a protective layer on the colored layer in each process.

The need of repeating the same process three times to form the three colored patterns of R, G and B is common to these processes. Therefore, the production cost is necessarily increased. There is also offered a problem that a yield is reduced as the number of processes increases. In the electrodeposition process, besides, formable patterns are limited. It is hence difficult to apply this process to a TFT color liquid crystal display device in the existing technique. Further, the printing process is poor in resolution, and so fine-pitch patterns are difficult to form.

In order to eliminate these drawbacks, Japanese Patent Application Laid-Open Nos. 59-75205, 63-235901 and 1-217302 each have proposed a process for producing a color filter using an ink-jet system. However, these processes are not yet satisfactory.

JP-5 241 011A discloses a process for producing a colour filter by applying inks to a base by an ink-jet system, wherein a photosensitive resin layer to be removed in exposed parts in a developing stage and a silicon rubber layer in this order are laminated on light translucent substrate formed with light shieldable parts between the previously patterned picture elements. The resin layer is irradiated with UV-light from the rear side of the substrate with the light shieldable parts between the previously patterned picture elements as a mask to scatter the light and to expose the resin layer and to form partition walls in alignment to the light shieldable parts. Then the opening parts are subjected to coloration with three primary colours by an ink-jet method.

EP 552 035a discloses a colour pattern forming method on a transparent substrate, particularly a method of manufacturing a colour filter for colour liquid crystal display, using polysilane as a resin.

### SUMMARY OF THE INVENTION

It is therefore an object of the present invention to provide a production process of a color filter, which satisfies both required properties met by the conventional processes, such as heat resistance, solvent resistance and resolution, and moreover permits the shortening of production steps to cheaply produce the color filter, a color filter produced by this process and having high reliability, and a liquid crystal display panel in which this color filter is used, and particularly to provide a production process of a color filter for liquid crystal display device, which has high reliability in that color mixing, color irregularity and blank areas are prevented upon arrangement of colorants by application of inks using an ink-jet system.

Another object of the present invention is to provide a production process of a color filter, by which the production steps can be more simplified to reduce the production cost.

The above objects can be achieved by the present invention described below.

### BRIEF DESCRIPTION OF THE DRAWINGS

Figs. 1A through 1E illustrate a production process of a color filter for liquid crystal display device.

Figs. 2A through 2E illustrate a production process of a color filter for liquid crystal display device.

Figs. 3A and 3B are plan views of color filters for liquid crystal display device.

Figs. 4A through 4F illustrate a production process of a color filter according to an embodiment of the present invention.

Figs. 5A through 5F illustrate a production process of a color filter according to a further embodiment of the present invention.

Fig. 6 is a cross-sectional view of a liquid crystal display panel in which a color filter for liquid crystal display device is mounted.

Fig. 7 is a cross-sectional view of another liquid crystal display panel in which a color filter for liquid crystal display device is mounted.

### DESCRIPTION OF THE PREFERRED EMBODIMENTS

The present invention will hereinafter be described in detail by reference to the drawings.

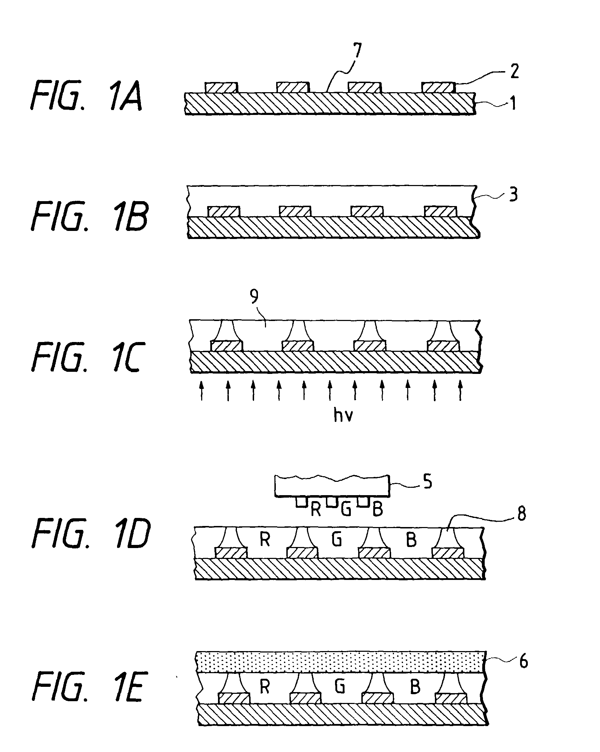

Figs. 1A through 1E show a flow sheet illustrating a production process of a color filter for liquid crystal display device and illustrate an example of the construction of the color filter for liquid crystal display device.

In the present invention, a glass base is generally used as a base. However, a plastic base may be used so far as it has properties required of the color filter for liquid crystal display device, such as transparency and mechanical strength.

Fig. 1A illustrates a state that black matrices (light-screening areas) 2 have been formed on a glass base 1 which will have light-transmitting areas 7 (apertures defined by the black matrices 2).

A resin composition, the ink absorptivity of which is improved at its light-exposed portions by light irradiation or light irradiation and a heat treatment, is first applied to the base on which the black matrices 2 have been formed, and is prebaked, as needed, to form a resin layer 3 (Fig. 1B). In this embodiment, an example in which the resin layer is formed by light irradiation alone is described. However, no problem arises even if a resin composition, the ink absorptivity of which is improved at its light-exposed portions by a combination of light irradiation and a heat treatment, is used as the resin composition.

A resin for forming the resin layer 3 used in the present invention is a polysilane having a structural unit represented by the general formula: 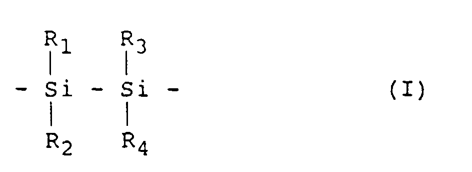 wherein R₁ to R₄ may be identical with or different from one another and are, independently of one another, hydrogen or a substituted or unsubstituted, aliphatic or aromatic hydrocarbon group, with the proviso that R₁ to R₄ do not denote hydrogen at the same time.

This compound undergoes a break of silicon-silicon bond by light irradiation to form silanol, whereby a difference in wettability by ink and/or ink absorptivity arises between the exposed portions and the unexposed portion of the resin layer, and so the unexposed portions function as walls for preventing color mixing of inks of different colors upon coloring by an ink-jet system. Therefore, this compound can prevent color mixing (including color mixing caused by migration of a coloring material) of the inks of different colors.

This polysilane has such a nature that once it is colored and dried, it is difficult to be colored with other dyes, so that a problem of color mixing of colored portions with other dyes is also hard to arise.

Specific preferable examples of the silicon compound represented by the general formula (I) are mentioned below.

Illustrative Compound No. 1:

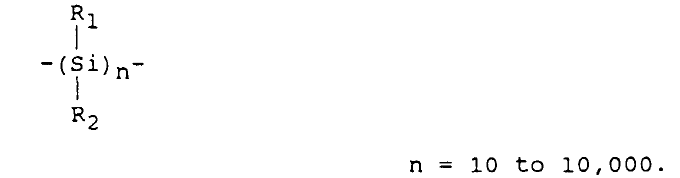

Particularly preferable examples thereof include those wherein
R₁ = R₂ = -CH₃;
R₁ = -CH₃, R₂ = -Ph; and
R₁ = -CH₃, R₂ = -CH₂CH₂Ph.

Illustrative Compound No. 2:

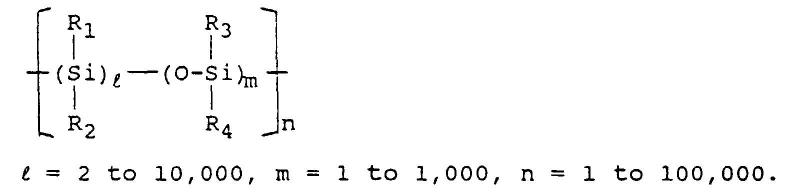

Particularly preferable examples thereof include those wherein
R₁ = R₂ = R₃ = R₄ = -CH₃;
R₁ = -CH₃, R₂ = -Ph, R₃ = R₄ = -CH₃;
R₁ = -CH₃, R₂ = -CH₂CH₂Ph, R₃ = R₄ = -CH₃; and
R₁ = -CH₃, R₂ = -Ph, R₃ = -CH₃, R₄ = -Ph.

Illustrative Compound No. 3:

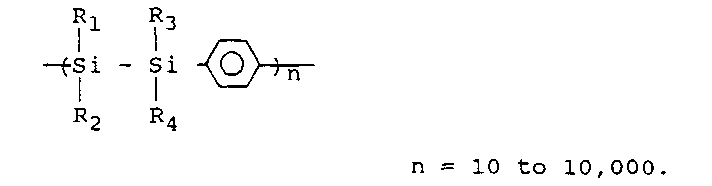

Particularly preferable examples thereof include those wherein
R₁ = R₂ = R₃ = R₄ = -CH₃;
R₁ = -CH₃, R₂ = -Ph, R₃ = -CH₃, R₄ = -Ph;
R₁ = -CH₃, R₂ = -CH₂CH₂Ph, R₃ = R₄ = -CH₃; and
R₁ = R₂ = R₃ = -CH₃, R₄ = -Ph.

Illustrative Compound No. 4:

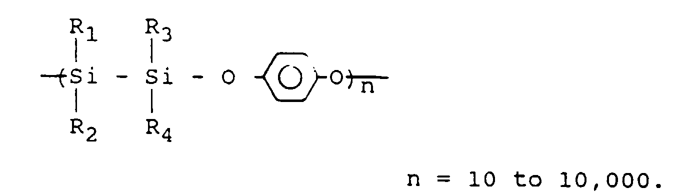

Particularly preferable examples thereof include those wherein
R₁ = R₂ = R₃ = R₄ = -CH₃;
R₁ = -CH₃, R₂ = -Ph, R₃ = -CH₃, R₄ = -Ph;
R₁ = -CH₃, R₂ = -CH₂CH₂Ph, R₃ = R₄ = -CH₃; and
R₁ = R₂ = R₃ = -CH₃, R₄ = -Ph.

Illustrative Compound No. 5:

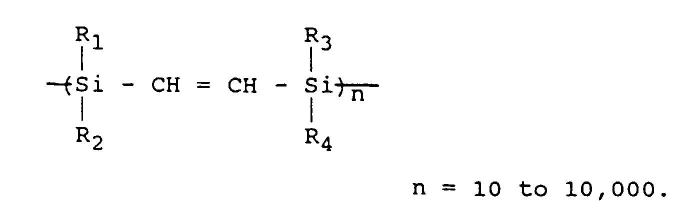

Particularly preferable examples thereof include those wherein
R₁ = R₂ = R₃ = R₄ = -CH₃;
R₁ = -CH₃, R₂ = -Ph, R₃ = R₄ = -CH₃;
R₁ = -CH₃, R₂ = -CH₂CH₂Ph, R₃ = R₄ = -CH₃; and
R₁ = -CH₃, R₂ = -Ph, R₃ = -CH₃, R₄ = -Ph.

Illustrative Compound No. 6:

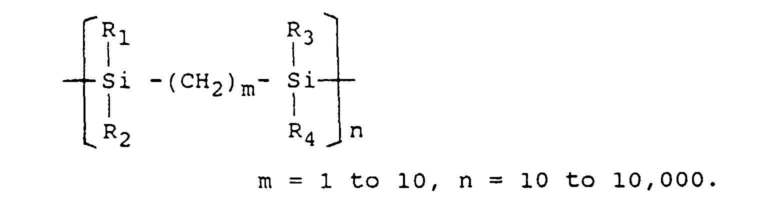

Particularly preferable examples thereof include those wherein
R₁ = R₂ = R₃ = R₄ = -CH₃;
R₁ = -CH₃, R₂ = -Ph, R₃ = R₄ = -CH₃;
R₁ = -CH₃, R₂ = -CH₂CH₂Ph, R₃ = R₄ = -CH₃; and
R₁ = -CH₃, R₂ = -Ph, R₃ = -CH₃, R₄ = -Ph.

Illustrative Compound No. 7:

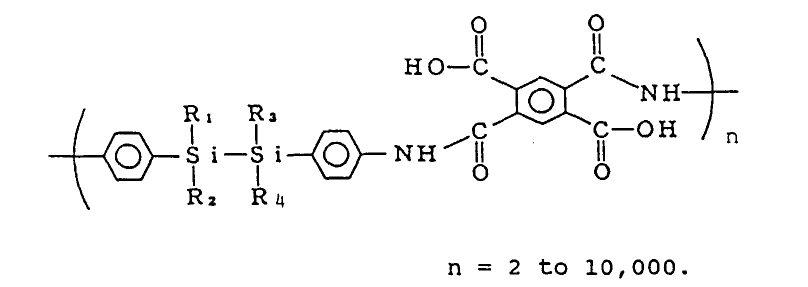

Particularly preferable examples thereof include those wherein
R₁ = R₂ = R₃ = R₄ = -CH₃;
R₁ = -CH₃, R₂ = -Ph, R₃ = -CH₃, R₄ = Ph;
R₁ = -CH₃, R₂ = -CH₂CH₂Ph, R₃ = R₄ = -CH₃; and
R₁ = R₂ = R₃ = -CH₃, R₄ = -Ph.

Those having a weight average molecular weight ranging from 1,000 to 30,000,000 are preferably used. Those having a weight average molecular weight lower than 1,000 have poor film-forming property, while those having a weight average molecular weight higher than 30,000,000 have extremely low solubility and ink absorptivity.

An electron-transferring additive such as phthalimide triflate may be added for the purpose of sensitizing the silicon compound.

No particular limitation is imposed on the process for the formation of the resin layer, and a coating process such as spin coating, roll coating, bar coating, spray coating or dip coating may be used. The thickness of the resin layer is preferably from 0.5 to 10 µm, more prferably from 1 to 10 µm.

The base 1, on which the resin layer has been formed, is then subjected to whole-surface exposure from the side of the base using the matrices 2 as a mask to expose resin portions on the apertures surrounded by the black matrices 2 and a part of the resin layer on the black matrices (Fig. 1C). Thereafter, inks of R, G and B colors are applied to the exposed portions 9 of the resin layer at the same level using an ink-jet head 5, and a heat treatment is then conducted to dry the inks and set the resin layer (Fig. 1D). The unexposed portions 8 of the resin layer function as walls for preventing color mixing and become uncolored portions.

In order to prevent the occurrence of blank areas of the color filter, it is preferable to color wider areas than portions corresponding to the apertures defined by the black matrices 2. Therefore, in order to react the resin in the resin layer at wider areas than portions corresponding to the apertures defined by the black matrices 2 used as the mask, it is preferable to use diffuse light as irradiation light upon the exposure. Alternatively, it is also an effective means to conduct over exposure so as to diffuse the reaction. Fig. 1 illustrates an example making use of the black matrices as the mask. However, it may be permissible to use a photomask so as to perform patterning exposure from the side of the resin layer.

As the photomask used upon this patterning exposure, there is used a photomask having openings for exposing the resin layer 3 at portions corresponding to the areas to be colored by an ink-jet head 5. In view of the need of ejecting an ink in a rather great amount to prevent the occurrence of blank areas at boundaries between the black matrices 2 provided on the base and the apertures defined by them, at this time, it is preferable to use a photomask having openings wider than the width of the apertures defined by the black matrices. More specifically, it is preferable to form an unexposed portion on each of the black matrices at least 3 µm inside from the edges of the black matrix.

As coloring materials used in the coloring, both dyes and pigments may be used. As the ink-jet system, a bubble-jet type using an electrothermal converter as an energy-generating element, a piezo-jet type making use of a piezoelectric element or the like may be used. A coloring area and a coloring pattern may be optionally preset.

In this embodiment, an example in which the black matrices are formed on the base is described. However, the black matrices may be formed on the resin layer after the formation of the resin layer or the coloring, or formed on a base opposite to the color filter base. The form thereof is not limited to this embodiment. As a method of forming the black matrices, it is common to form a metal film on the base by sputtering or vacuum deposition, and pattern this film by a photolithographic process, or to use a black photosensitive resin to directly pattern this resin by the photolithographic process, to which, however, is not limited.

A protective layer 6 is then formed on the resin layer 3 as needed (Fig. 1E).

As the protective layer, a resin material of the photo-setting type, thermosetting type or light- and heat-setting type, or an inorganic film formed by vacuum deposition, sputtering or the like may be used. Any material may be used so far as it has sufficient transparency to be used in a color filter and withstands subsequent ITO-forming process, orientation film-forming process and the like.

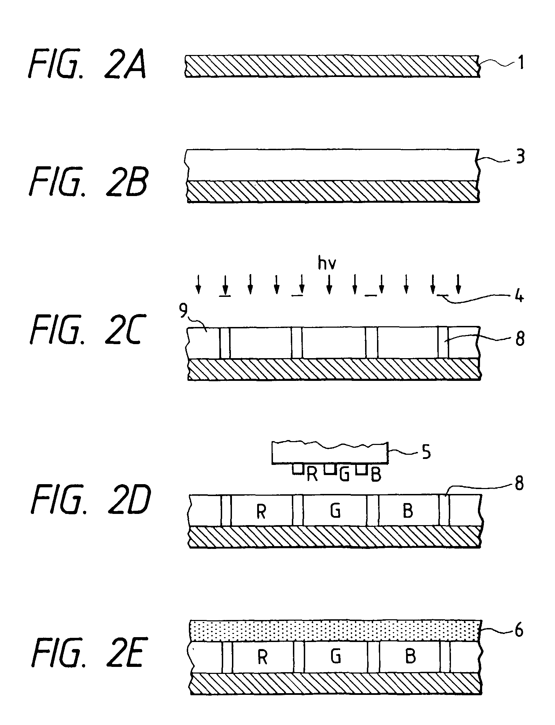

Figs. 2A to 2E illustrate a production process of a color filter used in a liquid crystal display panel in which black matrices are provided on a base opposite to a color filter base.

A process in which the black matrices are provided on the opposite base, not on the side of the color filter, is useful as a method of improving aperture efficiency.

A resin composition, the ink absorptivity of which is improved at its light-exposed portions by light irradiation or light irradiation and a heat treatment, is first applied to a base 1 and is prebaked, as needed, to form a resin layer 3 (Fig. 2B).

The resin layer 3 is then subjected to patterning exposure using a mask 4, thereby reacting the resin composition to form a pattern consisting of exposed portions 9 and unexposed portions 8 on the resin layer 3 (Fig. 2C). Thereafter, inks of R, G and B colors are applied to the exposed portions 9 of the resin layer at the same level using an ink-jet head 5, and a heat treatment is then conducted to set the colored resin layer (Fig. 2D). A protective layer 6 is then formed on the resin layer 3 as needed (Fig. 2E).

As the photomask 4 used upon the patterning exposure, a mask having openings through which the resin layer 3 will be exposed at its portions to be colored by the ink-jet head 5 is used. In view of the need of applying a rather great amount of inks to prevent the occurrence of blank areas at boundaries between the black matrices (not illustrated) provided on the opposite base and the apertures defined by them, at this time, it is preferable to use a mask having openings wider than the width of the apertures defined by the black matrices.

More specifically, it is preferable to form an unexposed portion at least 3 µm inside from the edges of each of the black matrices provided on the opposite base.

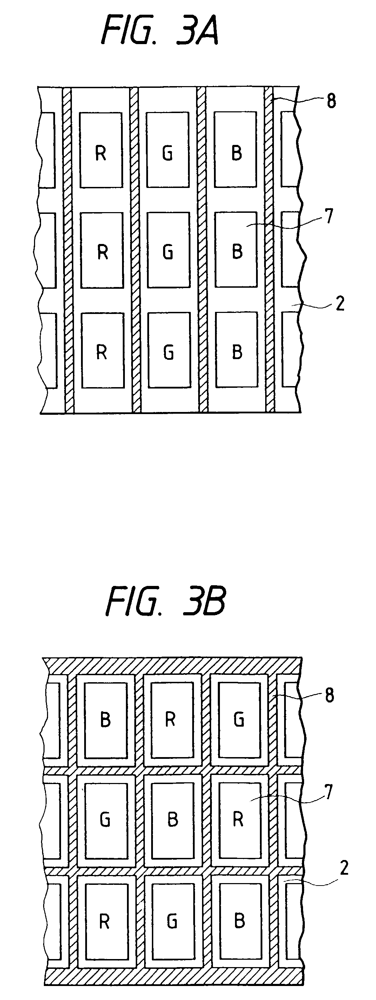

Figs. 3A and 3B illustrate plan views of the color filters in which patterning exposure is performed in the stripe form and in the matrix form, respectively.

The patterning exposure may be performed either in the stripe form as illustrated in Fig. 3A or in the matrix form as illustrated in Fig. 3B. The patterning exposure in the stripe form is suitable for the production of a color filter having a stripe-like colored pattern, while the patterning exposure in the matrix form is suitable for the production of a color filter having a matrix-like colored pattern.

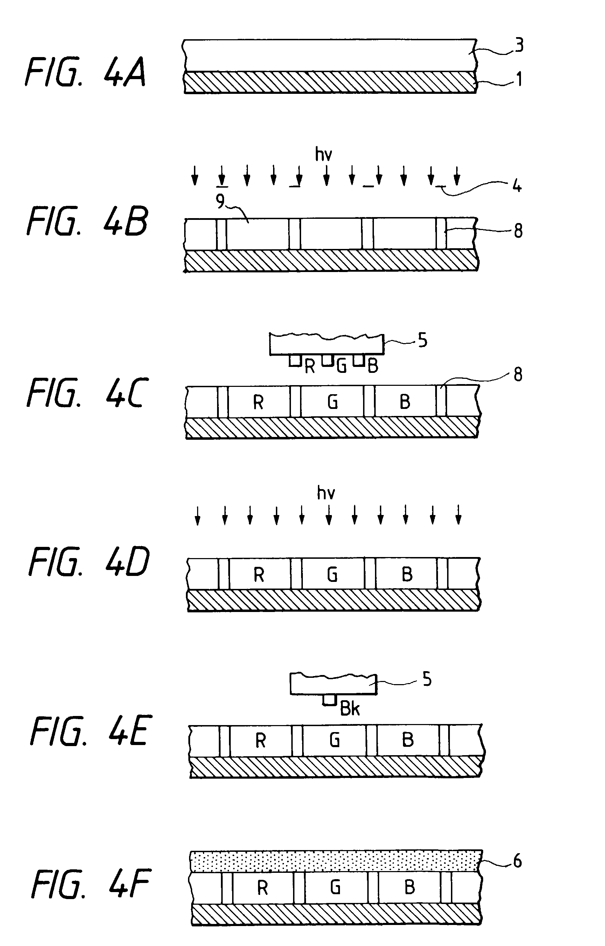

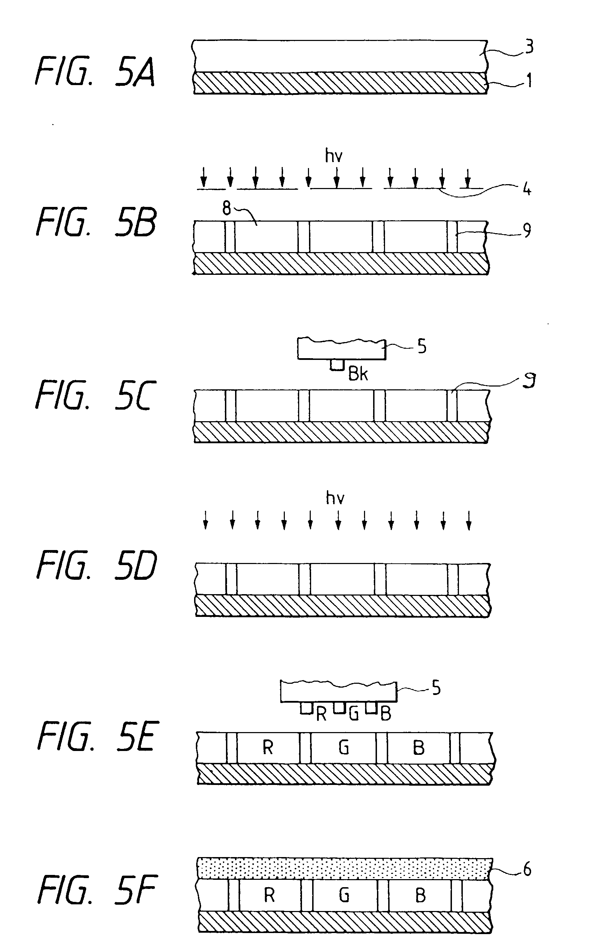

Production processes according to embodiments of the present invention are illustrated in Figs. 4A to 4F and Figs. 5A to 5F. In these embodiments, a process for forming black matrices at the same time as the formation of a color filter is described.

A polysilane film 3 is first formed on a glass base 1 (Fig. 4A). The polysilane film 3 is then subjected to patterning exposure using a mask 4, thereby forming a pattern consisting of exposed portions 9 and unexposed portions 8 on the polysilane film 3 (Fig. 4B). Thereafter, inks of R, G and B colors are applied to the exposed portions 9 at the same level using an ink-jet head 5, and a heat treatment is then conducted to set the colored portions (Fig. 4C).

After the colored polysilane film 3 is further subjected to whole-surface exposure to improve the ink absorptivity of the unexposed portions 8 (Fig. 4D), an ink containing a black dye is applied to the portions 8 exposed in this step using the ink-jet head 5 to form black matrices. A heat treatment is then conducted to set these colored portions, and the thus-treated polysilane film is washed as needed (Fig. 4E).

In this embodiment, an example in which the ink-jet system is used in the formation of the black matrices has been described. However, the process of the formation thereof is not limited to this embodiment, and the polysilane film may be dipped in a dyeing solution containing a black dye or black pigment to color it.

A protective layer 6 is then formed on the colored polysilane film as needed (Fig. 4F).

The production process shown in Figs. 5A to 5F illustrates an embodiment in which black matrices are first formed unlike the process shown in Figs. 4A to 4F.

As with the process shown in Figs. 4A to 4F, a polysilane film 3 is first formed on a glass base 1 (Fig. 5A). The polysilane film 3 is then subjected to patterning exposure using a mask 4, thereby forming a pattern consisting of exposed portions 9 and unexposed portions 8 on the polysilane film 3 (Fig. 5B). Thereafter, an ink containing a black dye is applied to the exposed portions 9 using an ink-jet head 5 to form black matrices. A heat treatment is then conducted to set the colored portions, and the thus-treated film is washed as needed (Fig. 5C). As with the embodiment shown in Figs. 4A to 4F, the polysilane film may be dipped in a dyeing solution containing a black dye or black pigment instead of the ink-jet system to color it.

After the polysilane film 3, on which the black matrices have been formed, is then subjected to whole-surface exposure to improve the ink absorptivity of the unexposed portions 8 (Fig. 5D), inks of R, G and B colors are applied to the portions 8 exposed in this step at the same level using the ink-jet head 5, and a heat treatment is then conducted to set the colored film (Fig. 5E).

A protective layer 6 is then formed on the colored polysilane film as needed (Fig. 5F).

According to the production processes illustrated in Figs. 4A to 4F and Figs. 5A to 5F, the color filter and the black matrices can be formed at the same time, and so the production steps can be simplified to reduce the production cost to a great extent.

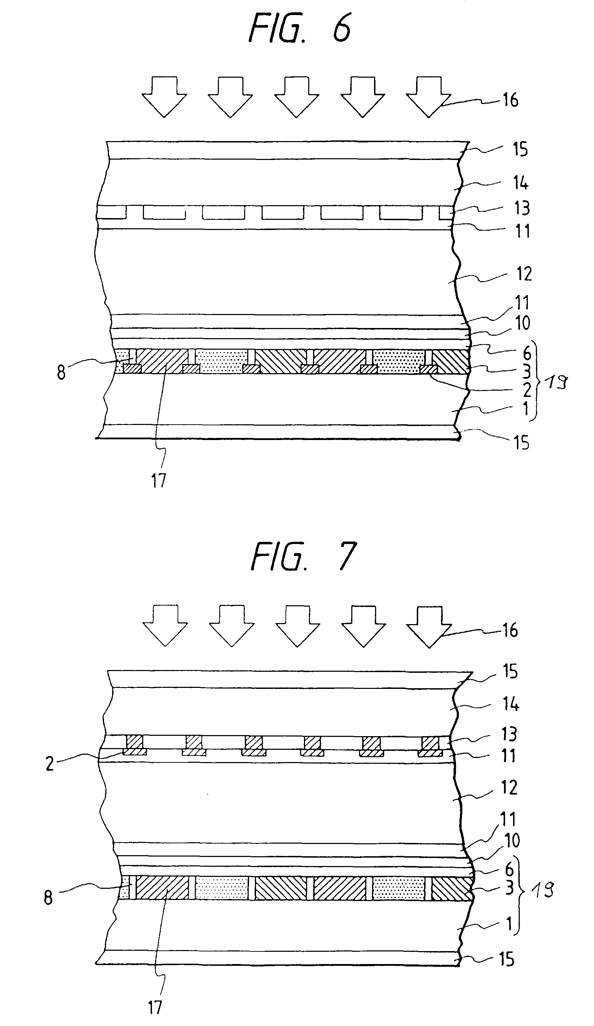

Figs. 6 and 7 illustrate cross sections of TFT color liquid crystal display panels in which a color filter 9 produced according to the present invention has been incorporated. The form thereof is not limited to these embodiments.

A color liquid crystal display panel is generally formed by uniting a color filter base 1 and a base 14 opposite to the color filter base 1 and enclosing a liquid crystal compound 12 in a space between them. TFT (not illustrated) and transparent pixel electrodes 13 are formed in the form of a matrix inside one base 14 of the liquid crystal display panel. The color filter 19 is disposed so as to arrange coloring matters of R, G and B colors at positions opposite to the pixel electrodes 13 inside the other base 1. A transparent counter (or common) electrode 10 is formed over on the color filter 9. Black matrices 2 are generally formed on the side of the color filter base (Fig. 6), but formed on the side of the opposite TFT base in a liquid crystal display panel of the BM on Array type (Fig. 7). Orientation films 11 are further formed within the surfaces of both bases. Liquid crystal molecules can be oriented in a fixed direction by subjecting these films to a rubbing treatment. Polarizing plates 15 are bonded to the outer surfaces of both glass bases. The liquid crystal compound 12 is charged into a space (about 2 to 5 pm) between these glass bases. As a back light 16, a combination of a fluorescent lamp and a scattering plate (both, not shown) is generally used. The liquid crystal compound functions as a shutter for changing the transmittance of rays from the back light, thereby making a display. Reference numerals 3, 6, 8 and 17 indicate a resin layer, a protective layer, unexposed portions and colored portions, respectively.

The present invention will hereinafter be described more specifically by the following Example 6, examples 1 to 5 illustrate processes not according to the present invention.

### Example 1:

Methylphenylpolysilane (weight average molecular weight: 5,000) represented by Illustrative Compound No. 1 was applied by spin coating to a glass base 1 on which black matrices 2 had been formed as illustrated in Fig. 1A, so as to give a dry coating thickness of 1 µm, and prebaked at 90°C for 20 minutes, thereby forming a resin layer 3.

The base 1, on which the resin layer had been formed, was then subjected to whole-surface exposure from the side of the base in a quantity of light of 2 J/cm² using a mercury lamp to subject the resin layer 3 on the black matrices 2 to patterning exposure as illustrated in Fig. 3B.

Inks separately containing dyes of R, G and B colors were then applied to the exposed portions of the resin layer using an ink-jet head 5 to color the resin layer on a matrix pattern. Thereafter, the colored resin layer was subjected to a heat treatment at 90°C for 5 minutes, thereby setting the resin layer.

A two-pack type thermosetting resin composition (Optomer SS-6688, trade name, product of Japan Synthetic Rubber Co., Ltd.) was then applied to the resin layer by spin coating so as to give a coating thickness of 1 µm. The thus-formed film was prebaked at 90°C for 30 minutes to form a second resin layer. The second resin layer was further heat-treated at 230°C for 30 minutes to set it, thereby producing a color filter.

The color filter for liquid crystal display device thus produced was observed through an optical microscope. As a result, defects such as color mixing, color irregularity and blank areas were not observed.

This color filter for liquid crystal display device was used to produce a TFT liquid crystal display panel as illustrated in Fig. 6. The operation of this panel revealed that vivid color images were able to be displayed.

### Example 2:

A color filter for liquid crystal display device was produced in the same manner as in Example 1 except that a methylphenylpolysilane-diphenylsiloxane copolymer represented by Illustrative Compound No. 2 (weight average molecular weight: 12,000) was used in place of the polysilane in Example 1.

The color filter for liquid crystal display device thus produced was observed through an optical microscope. As a result, defects such as color mixing, color irregularity and blank areas were not observed.

This color filter for liquid crystal display device was used to produce a TFT liquid crystal display panel as illustrated in Fig. 6. The operation of this panel revealed that vivid color images were able to be displayed.

### Example 3:

A color filter for liquid crystal display device was produced in the same manner as in Example 1 except that a disilanylenephenylene polymer represented by Illustrative Compound No. 3 (weight average molecular weight: 4,500) was used in place of the polysilane in Example 1.

The color filter for liquid crystal display device thus produced was observed through an optical microscope. As a result, defects such as color mixing, color irregularity and blank areas were not observed.

This color filter for liquid crystal display device was used to produce a TFT liquid crystal display panel as illustrated in Fig. 6. The operation of this panel revealed that vivid color images were able to be displayed.

### Example 4:

A color filter for liquid crystal display device was produced in the same manner as in Example 1 except that a composition composed of methylphenylpolysilane (weight average molecular weight: 5,000) represented by Illustrative Compound No. 1 and phthalimide triflate was used as a resin composition in place of the polysilane in Example 1.

The color filter for liquid crystal display device thus produced was observed through an optical microscope. As a result, defects such as color mixing, color irregularity and blank areas were not observed.

This color filter for liquid crystal display device was used to produce a TFT liquid crystal display panel as illustrated in Fig. 6. The operation of this panel revealed that vivid color images were able to be displayed.

### Example 5:

Methylphenylpolysilane (weight average molecular weight: 5,000) represented by Illustrative Compound No. 1 was applied by spin coating to a glass base 1 as illustrated in Fig. 2B, so as to give a dry coating thickness of 1 µm, and prebaked at 90°C for 20 minutes, thereby forming a resin layer 3.

The thus-formed resin layer was subjected to patterning exposure through a photomask 4 having openings wider than apertures defined by black matrices provided on a base opposite to the glass base 1 (Fig. 5) in a similar manner to Example 1.

Thereafter, coloring was performed, and a protective layer was provided in the same manner as in Example 1, thereby producing a color filter.

The color filter for liquid crystal display device thus produced was observed through an optical microscope. As a result, defects such as color mixing, color irregularity and blank areas were not observed.

This color filter for liquid crystal display device was used to produce a TFT liquid crystal display panel as illustrated in Fig. 7. The operation of this panel revealed that vivid color images were able to be displayed.

### Example 6:

The same polysilane as that used in Example 1 was applied by spin coating to a glass base 1 as illustrated in Fig. 4A, so as to give a dry coating thickness of 1 µm, and prebaked at 90°C for 20 minutes, thereby forming a polysilane film 3. This polysilane film 3 is then exposed to ultraviolet rays in a quantity of light of 2 J/cm² using a mercury lamp, thereby forming a pattern consisting of exposed portions 9 and unexposed portions 8.

Inks of R, G and B colors were then applied to the exposed portions 9 using an ink-jet head 5 to color the polysilane film on a matrix pattern. Thereafter, a heat treatment was conducted at 90°C for 5 minutes to set the polysilane film.

After the colored polysilane film 3 was then subjected to whole-surface exposure using the same light as described above to expose the unexposed portions 8, an ink containing a black dye was applied to the portions 8 exposed in this step using the ink-jet head 5 to form black matrices. A heat treatment was then conducted to set these portions, and the surface of the thus-treated polysilane film was washed.

A protective layer was then formed on the colored polysilane film in the same manner as in Example 1.

The color filter for liquid crystal display device thus produced was observed through an optical microscope. As a result, defects such as color mixing and color irregularity were not observed.

The use of the production process of a color filter for liquid crystal display device according to the present invention permits the economical production of color filters for liquid crystal display device, which are free of defects such as color mixing, color irregularity and blank areas and hence high in reliability.

According to the present invention, the color filter and the black matrices can be formed at the same time, and so the production steps can be more simplified to reduce the production cost.

## Claims

1. A process for producing a color filter by applying inks to a base (1) by an ink-jet system (5) to color the base (1), which comprises the steps of:
(1) forming, on the base (1), a resin layer (3) comprising a silicon compound having a structural unit represented by the general formula: 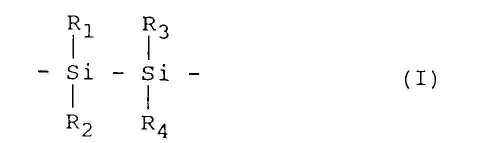 wherein
R₁ to R₄ may be identical with or different from one another and are, independently of one another, hydrogen or a substituted or unsubstituted, aliphatic or aromatic hydrocarbon group, with the proviso that R₁ to R₄ do not denote hydrogen at the same time;
(2) subjecting the resin layer (3) to patterning exposure to form a pattern consisting of exposed portions (9) and unexposed portions (8);
(3) applying inks (R, G, B) to the resin layer by the ink-jet system (5) to color the exposed portions (9) of the resin layer (3);
(4) subjecting the resin layer (3) to whole-surface exposure to expose the unexposed portions (8); and
(5) coloring the portions (8) exposed in the step (4) in a black color (Bk).

2. A process for producing a color filter by applying inks to a base (1) by an ink-jet system (5) to color the base (1), which comprises the steps of:
(1) forming, on the base (1), a resin layer (3) comprising a silicon compound having a structural unit represented by the general formula: 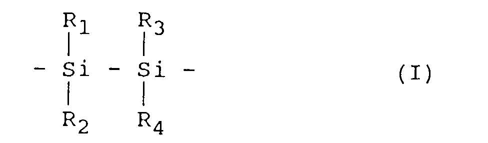 wherein
R₁ to R₄ may be identical with or different from one another and are, independently of one another, hydrogen or a substituted or unsubstituted, aliphatic or aromatic hydrocarbon group, with the proviso that R₁ to R₄ do not denote hydrogen at the same time;
(2) subjecting the resin layer (3) to patterning exposure to form a pattern consisting of exposed portions (9) and unexposed portions (8);
(3) coloring the exposed portions (9) in a black color;
(4) subjecting the resin layer (3) to whole-surface exposure to expose the unexposed portions (8); and
(5) applying inks (R, G, B) to the resin layer (3) by the ink-jet system (5) to color the portions (8) exposed in the step 4.

3. The process according to claim 1 or 2, wherein the thickness of the resin layer (3) falls within a range of from 0.5 to 10 µm.

4. The process according to any one of the preceding claims, wherein inks of red (R), green (G) and blue (B) colors are applied.

5. The process according to any one of the preceding claims, wherein the silicon compound has a weight average molecular weight ranging from 1,000 to 30,000,000.

6. The process according to any one of the preceding claims, further comprising forming a protective layer (6) on the colored resin layer (3).

## Patentansprüche

1. Verfahren zur Herstellung eines Farbfilters durch Aufbringen von Tinten auf einen Träger (1) mittels eines Tintenstrahlsystems (5) zum Färben des Trägers (1), wobei das Verfahren die Schritte aufweist:
(1) Ausbilden einer Harzschicht (3) auf dem Träger (1), wobei die Harzschicht eine Silicium-Verbindung mit einer Struktureinheit aufweist, die durch die nachfolgende allgemeine Formel repräsentiert ist: 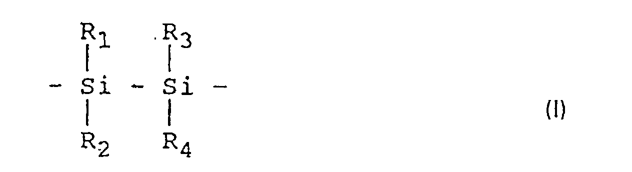 wobei,
R₁ bis R₄ identisch oder voneinander verschieden und unabhängig voneinander Wasserstoff oder eine substituierte oder unsubstituierte aliphatische oder aromatische Kohlewasserstoffgruppe sein können, vorausgesetzt, dass R₁ bis R₄ nicht alle gleichzeitig Wasserstoff bezeichnen,
(2) Aussetzen der Harzschicht (3) einer strukturbildenden Belichtung zur Bildung eines Musters, welches aus belichteten Abschnitten (9) und unbelichteten Abschnitten (8) besteht,
(3) Aufbringen von Tinten (R, G, B) auf die Harzschicht durch das Tintenstrahlsystem (5) zum Färben der belichteten Abschnitte (9) der Harzschicht (3),
(4) Aussetzen der Harzschicht (3) einer Ganzflächen-Belichtung zur Belichtung der unbelichteten Abschnitte (8) und
(5) Schwarzfärben (Bk) der im Schritt (4) belichteten Abschnitte (8).

2. Verfahren zur Herstellung eines Farbfilters durch Aufbringen von Tinten auf einen Träger (1) mittels eines Tintenstrahlsystems (5) zum Färben des Trägers (1), wobei das Verfahren die Schritte aufweist:
(1) Ausbilden einer Harzschicht (3) auf dem Träger (1), wobei die Harzschicht eine Silicium-Verbindung mit einer Struktureinheit aufweist, die durch die nachfolgende allgemeine Formel repräsentiert ist: 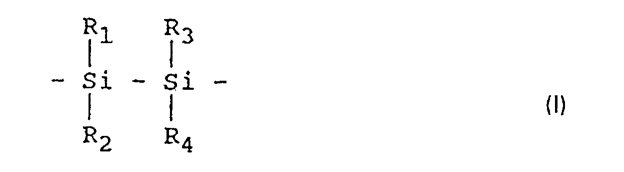 wobei,
R₁ bis R₄ identisch oder voneinander verschieden und unabhängig voneinander Wasserstoff oder eine substituierte oder unsubstituierte aliphatische oder aromatische Kohlewasserstoffgruppe sein können, vorausgesetzt, dass R₁ bis R₄ nicht alle gleichzeitig Wasserstoff bezeichnen,
(2) Aussetzen der Harzschicht (3) einer strukturbildenden Belichtung zur Bildung eines Musters, welches aus belichteten Abschnitten (9) und unbelichteten Abschnitten (8) besteht,
(3) Schwarzfärben der belichteten Abschnitte (9),
(4) Aussetzen der Harzschicht (3) einer Ganzflächen-Belichtung zur Belichtung der unbelichteten Abschnitte (8) und
(5) Aufbringen von Tinten (R, G, B) auf die Harzschicht (3) durch das Tintenstrahlsystem (5) zum Färben der im Schritt 4 belichteten Abschnitte (8).

3. Verfahren nach Anspruch 1 oder 2, wobei die Dicke der Harzschicht (3) im Bereich zwischen 0,5 und 10 µm liegt.

4. Verfahren nach einem der vorangehenden Ansprüche, wobei rote (R), grüne (G) und blaue (B) Tinten eingesetzt werden.

5. Verfahren nach einem der vorangehenden Ansprüche, wobei die Silicium-Verbindung ein gewichtsbezogenes mittleres Molekülgewicht im Bereich zwischen 1.000 und 30.000.000 hat.

6. Verfahren nach einem der vorangehenden Ansprüche, welches weiter die Bildung einer Schutzschicht (6) auf der gefärbten Harzschicht (3) umfasst.

## Revendications

1. Procédé pour la production d'un filtre coloré en appliquant des encres à une base (1) par un système à jet d'encre (5) pour colorer la base (1), qui comprend les étapes consistant :
(1) à former, sur la base (1), une couche de résine (3) comprenant un composé de silicium ayant un motif structural représenté par la formule générale : 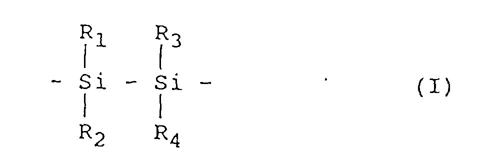 dans laquelle
R₁ à R₄ peuvent être identiques ou différents et représentent, indépendamment l'un de l'autre, l'hydrogène ou un groupe hydrocarboné aliphatique ou aromatique substitué ou non substitué, sous réserve que R₁ à R₄ ne représentent pas l'hydrogène en même temps ;
(2) à soumettre la couche de résine (3) à une exposition à des fins de formation de motif, pour former un motif consistant en parties exposées (9) et parties non exposées (8) ;
(3) à appliquer des encres (R, V, B) à la couche de résine par le système à jet d'encre (5) pour colorer les parties exposées (9) de la couche de résine (3) ;
(4) à soumettre la couche de résine (3) à une exposition sur la totalité de la surface pour exposer les parties non exposées (8) ; et
(5) à colorer les parties (8) exposées dans l'étape (4) en noir (N).

2. Procédé pour la production d'un filtre coloré en appliquant des encres à une base (1) par un système à jet d'encre (5) pour colorer la base (1), qui comprend les étapes consistant :
(1) à former, sur la base (1), une couche de résine (3) comprenant un composé de silicium ayant un motif structural représenté par la formule générale : 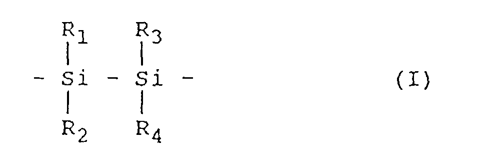 dans laquelle
R₁ à R₄ peuvent être identiques ou différents et représentent, indépendamment l'un de l'autre, l'hydrogène ou un groupe hydrocarboné aliphatique ou aromatique, substitué ou non substitué, sous réserve que R₁ à R₄ ne représentent pas l'hydrogène en même temps ;
(2) à soumettre la couche de résine (3) à une exposition à des fins de formation de motif, pour former un motif consistant en des parties exposées (9) et des parties non exposées (8) ;
(3) à colorer les parties exposées (9) en noir ;
(4) à soumettre la couche de résine (3) à une exposition sur la totalité de la surface pour exposer les parties non exposées (8) ; et
(5) à appliquer des encres (R, V, B) à la couche de résine (3) par le système à jet d'encre (5) pour colorer les parties (8) exposées dans l'étape (4).

3. Procédé suivant la revendication 1 ou 2, dans lequel l'épaisseur de la couche de résine (3) est comprise dans l'intervalle de 0,5 à 10 µm.

4. Procédé suivant l'une quelconque des revendications précédentes, dans lequel des encres de couleur rouge (R), de couleur verte (V), de couleur bleue (B) sont appliquées.

5. Procédé suivant l'une quelconque des revendications précédentes, dans lequel le composé de silicium a une moyenne en poids du poids moléculaire comprise dans l'intervalle de 1000 à 30 000 000.

6. Procédé suivant l'une quelconque des revendications précédentes, comprenant en outre la formation d'une couche protectrice (6) sur la couche de résine colorée (3).
